# EUROPEAN PATENT APPLICATION

(11) **EP 2 388 094 A1**
(43) Date of publication of application: **23.11.2011**
(21) Application number: 10731028.6
(22) Date of filing: 04.01.2010
(51) Int. Cl.: B23B 31/163, B23B 51/12, B23B 31/103

(54) **SELF-TIGHTENING DRILL CHUCK**

(30) Priority: 13.01.2009 CN 200920000241 U
(71) Applicant: Yu, Qingzi, Guang Dong (CN)
(72) Inventor: Yu, Qingzi, Guang Dong (CN)
(74) Representative: Baldwin, Mark
(86) International application number: PCT/CN2010/070011
(87) International publication number: WO 2010/081394

(57) **Abstract**

A self-tightening drill chuck includes a drill chuck main body, three collet jaws, a pushing threaded rod and a pushing nut. A spiral groove having an arc-shaped cross-section is machined on the outer surface of the pushing threaded rod, and at least three through holes are machined along the radial direction on the pushing nut at a position opposite to the spiral groove on the outer surface of the pushing threaded rod. One steel ball and one lock-pin preventing the steel ball from falling off are positioned in each through hole. One part of the steel ball is set in said spiral groove, and another part of the steel ball is set in said through hole. The pushing nut is rotably jointed on the pushing threaded rod via said steel ball, thus the friction force between the pushing threaded rod and the pushing nut is decreased in order to prevent them from locking.

## Description

### BACKGROUND OF INVENTION

### 1. Field of the Invention

The present invention relates generally to a chuck of drilling machine, and more particularly to a self-tightening drill chuck.

### 2. Description of Related Art

Lathes and electric drills, etc, are generally used for boring and milling in the fabrication process, and drill chucks mounted onto the driving axles of such equipments for holding drill heads and milling cutters are continuously improved. Yet, despite of the advantages of common drill chucks (e.g.: wrench-type drill chucks) including: simple processing technique and lower cost, the chucking power has to be supplied manually by wrench and maintained through the frictional force among threaded teeth, so the chucking power is restricted. When the resisting torque exceeds the chucking power, the cutter will be loosened, resulting in slippage; besides, mechanical vibration will also lead to loosing of the drill chuck and insufficient chucking power against normal production; as threaded teeth of such drill chuck are machined externally onto three collet jaws and must be matched to each other, this brings about difficulty in fabrication and management, and increases the production and management cost while causing poorer precision and stability. Alternatively, a self-tightening drill chuck comprises: a drill chuck main body, a pushing rod rotatably jointed on the drill chuck main body, a pushing disc connected at lower end of the pushing rod, wedged collet jaw and metal casing for limitation of the wedged collet jaw; the drill chuck is characterized by self-tightening function, bigger chucking power, resistance to loosing and improved precision and stability; but the wedged collet jaw can be only used in occasions requiring for higher precision and stability of bigger equipments due to difficulty in fabrication, lower yield, bigger weight, complex structure and higher cost. As for other technical schemes of self-tightening drill chucks, the complex structure and higher fabrication cost are a barrier to the marketing promotion, whilst extremely big chucking power or deformation of the threaded rod and nut will often result in locking, making it very difficult for loosening and replacement, or the loss of the wrench or damage of the wrench teeth leads to inconvenient clamping and loosening.

### SUMMARY OF THE INVENTION

For the aforementioned problems, the technical scheme provides a self-tightening drill chuck, which can be extensively used since its anti-locking and self-tightening functions, bigger chucking power, improved precision and stability as well as simple structure, lightweight, good processibility and lower fabrication cost.

The technical scheme of the present invention provides a self-tightening drill chuck, which comprises a drill chuck main body and three collet jaws; three collet jaw holes penetrating the upper and lower ends are machined obliquely and symmetrically on said drill chuck main body, and a cutter hole bigger than maximum assembly O.D. (outside diameter) is machined on the lower end along the central axle of said drill chuck main body; said three collet jaws are separately and slidably assembled into said collet jaw holes; and said three collet jaws are of cylindrical bodies with smooth surface; said self-tightening drill chuck also comprises pushing threaded rod and pushing nut; of which a taper hole or screw hole or connecting hole matching the driving shaft for assembly of the main unit of the self-tightening drill chuck is machined on the upper end of said pushing threaded rod; a connecting hole matching O.D. of the lower end of the pushing threaded rod is machined on the upper end of said drill chuck main body along the central axle; the lower end of said pushing threaded rod is movably set into said connecting hole; a limiting device for preventing disengagement is set between said drill chuck main body and pushing threaded rod; three open slots are machined diametrically on the lower end of the outer flange of said pushing nut correspondingly to the upper end of said three collet jaws, with the cross-section having a non-closed curve with lower opening; the width of the lower opening is smaller than the maximal spacing of any two linking points on the curve in parallel with the opening; the upper end of said three collet jaws is provided with a bulge matching said open slot; and said bulge is movably set into the corresponding open slot; a spiral groove having an arc-shaped cross-section is machined on the outer surface of the pushing threaded rod, and at least three through holes are machined along the radial direction on the pushing nut at a position opposite to the spiral groove on the outer surface of the pushing threaded rod; one steel ball and one lock-pin preventing the steel ball from falling off are positioned in each through hole; one part of the steel ball is set in said spiral groove, and another part of the steel ball set in said through hole; the pushing nut is rotatably jointed on the pushing threaded rod via said steel ball.

As a preferred option, the bulge at upper end of said collet jaw is of spherical or semi-spherical shape, and said bulge is movably set into said open slot.

As a preferred option, a friction disc is fixed onto the upper end of said cutter hole; the lower end surface of said friction disc is machined into a rough surface, and a blind hole is drilled into the upper center of said friction disc; an adaptive steel ball is movably installed into the blind hole, and located between said friction disc and pushing threaded rod over the upper plane of the friction disc.

As a preferred option, said limiting device includes: a ring-shaped second bearing groove machined externally on the lower end of said pushing threaded rod having at least a semi-circular cross-section, bearing steel balls and a first bearing groove machined on the inner wall of said connecting hole opposite to said second bearing groove; said first bearing groove is of semi-circular shape, with the radius of its cross-section equal to that of the second bearing groove; the diameter of said bearing steel ball corresponds to that of the first and second bearing grooves; said bearing steel balls are placed into a circular chamber formed by the first and second bearing grooves.

As a preferred option, an assembly hole is set at upper end of said drill chuck main body opposite to the first bearing groove; said assembly hole is a through hole with female thread having a diameter bigger than that of the bearing steel ball; a closed screw is screwed into the assembly hole.

As a preferred option, said limiting device includes: a protruding disk set at lower end of said pushing threaded rod, bearing steel balls and a cover plate; a protruding disk with bearing groove machined separately onto its upper and lower surfaces is set at lower end of said pushing threaded rod; a bearing groove is also machined onto the bottom of the inner wall of said connecting hole correspondingly to the bearing groove at bottom of said protruding disk, and bearing steel balls are fully placed into the circular chamber formed by the bearing grooves; said cover plate is sleeved onto the pushing threaded rod and also fixed to the upper end of the drill chuck main body; a bearing groove is machined onto the lower surface of said cover plate correspondingly to the bearing groove at upper surface of said protruding disk, and bearing steel balls are fully placed into the circular chamber formed by the bearing grooves.

As a preferred option, said self-tightening drill chuck also includes: a tightening device, which consists of a casing, locking spring, locking gland and locknut; a limiting groove is set at upper end of said pushing threaded rod; said locking spring is a disc spring with a slotted notch machined externally; and a through hole matching O.D. of the pushing threaded rod and said limiting groove is machined into its center; said locking spring is sleeved onto the upper end of said pushing threaded rod; said locking gland is a cylinder with lower opening; its inner diameter (I.D.) is bigger than O.D. of the upper end of said casing; a gland through hole is machined onto the upper center of said locking gland matching O.D. of the upper end of said pushing threaded rod; locking pins are uniformly set onto the inner surface of the upper end of said locking gland along the circumference of the gland through hole; said locking gland is sleeved on the upper end of said pushing threaded rod and located over the locking spring; said locknut is a cylinder with lower opening; its I.D. is bigger than O.D. of the locking gland, and a female screw hole matching the upper thread of said pushing threaded rod is machined onto its center; said locknut is rotatably jointed on the upper end of said pushing threaded rod, and located over said locking gland; said casing is a cylinder with upper opening; its I.D. is bigger than maximum O.D. of said drill chuck main body and O.D. of said pushing nut, and a casing through hole matching the O.D. of lower end of said drill chuck main body is set at its lower end along the central axle; the lower end of said drill chuck main body is tightly sleeved into said casing through hole, and I.D. of the upper end of said casing matches O.D. of said locking spring.

As a preferred option, a locking steel ring is fixed onto the inner wall of the upper end of said casing; I.D. of said locking steel ring matches O.D. of said locking spring.

As a preferred option, a V-shaped groove is set externally on said collet jaw along the axial line; a pinhole connected with the collet jaw hole from the exterior of the drill chuck main body is machined separately on the upper end of said drill chuck main body correspondingly to the collet jaw hole; a collet jaw stabilizing pin is set into said pinhole, and the head of said collet jaw stabilizing pin matches said V-shaped groove.

The efficacies of the technical scheme lie in that: the utility model provides a self-tightening drill chuck for self-tightening purposes since the pushing threaded rod and drill chuck main body are connected movably; the chucking power is generated by the interaction among the torque of the driving axle of equipment connected with the self-tightening drill chuck and inertia resisting torque of the drill chuck main body as well as the resisting torque transferred by the working cutter held by the self-tightening drill chuck; hence, the bigger chucking power can be maintained, while the precision and stability are improved; meanwhile, the pushing threaded rod and pushing nut are connected via steel ball, so the friction is small enough to overcome the prior shortcoming of possible locking; as three collet jaws are of cylindrical bodies with smooth surface, no threading is required, thus simplifying the procedures, reducing the processing difficulty and improving the yield of finished products; in addition, this minimizes the management cost, and facilitates the marketing promotion due to the advantages of simple structure, lightweight, good processibility and lower production cost; besides, this utility model overcomes the shortcomings of insufficient chucking power, possible loosing, lower precision and stability of wrench-type and manual drill chucks, and also addresses the disadvantages of common self-tightening drill chuck such as complex structure, bigger weight, processing difficulty and higher product cost as well as possible locking.

### BRIEF DESCRIPTION OF THE DRAWINGS

FIG. 1: a sectional view of preferred embodiment 1 of present invention;
FIG. 2: an exploded view of preferred embodiment 1 of the present invention;
FIG. 3: a schematic view of pushing nut in the preferred embodiment 1 of present invention;
FIG. 4: an assembly view of pushing nut and pushing threaded rod in the preferred embodiment 1 of present invention;
FIG. 5: a sectional view of preferred embodiment 2 of present invention;
FIG. 6: a sectional view of preferred embodiment 3 of present invention;
FIG. 7: a sectional view of preferred embodiment 4 of present invention.

Note: figures and letters thereof represent the names of corresponding parts.

### DETAILED DESCRIPTION OF THE PREFERRED EMBODIMENT

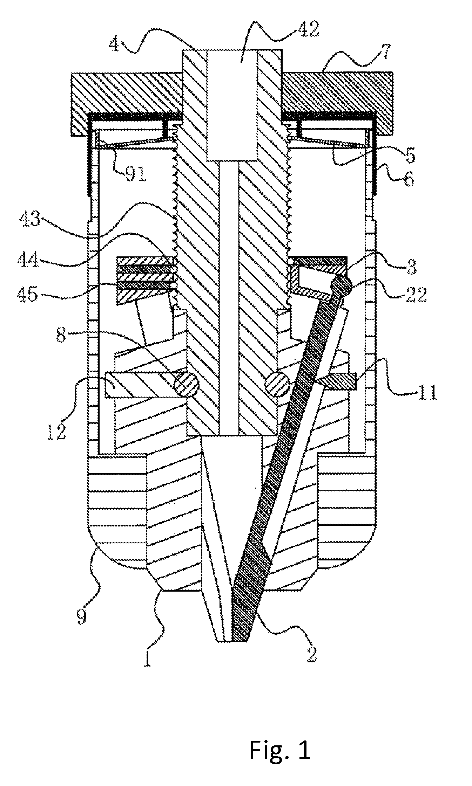

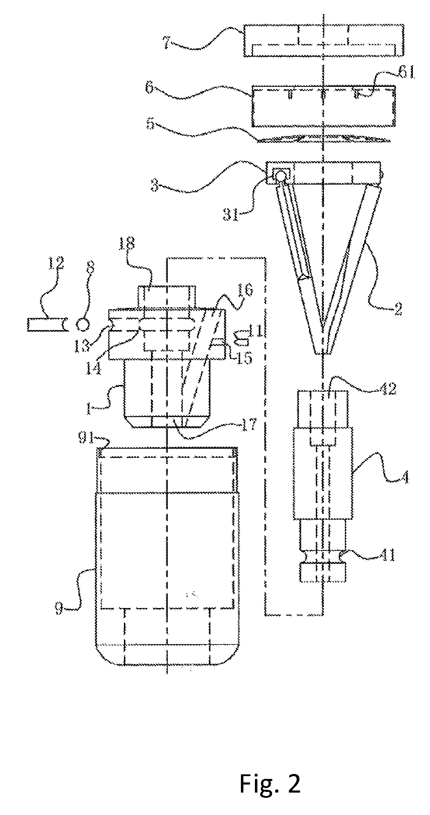

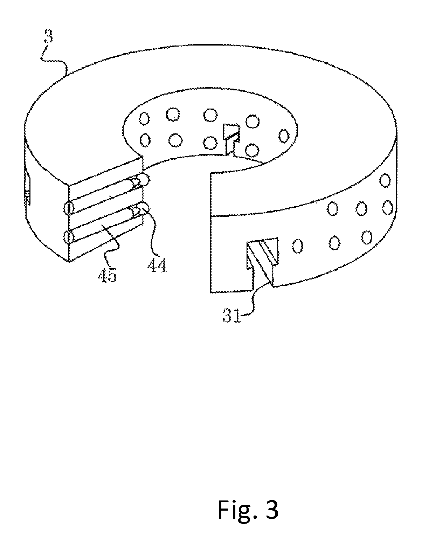

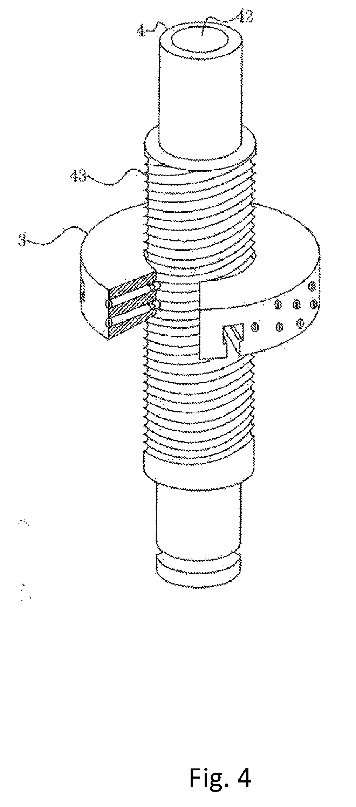

Referring to FIGS. 1-4 for preferred embodiment 1, a self-tightening drill chuck comprises: a drill chuck main body 1, three collet jaws 2, a pushing threaded rod 4, pushing nut 3, locking spring 5, locking gland 6, locknut 7, bearing steel ball 8 and casing 9; three collet jaw holes 16 penetrating the upper and lower ends are machined obliquely and symmetrically on said drill chuck main body 1, and a cutter hole 17 bigger than maximum assembly O.D. is machined on the lower end along the central axle of said drill chuck main body; said three collet jaws 2 are separately and slidably assembled into said collet jaw holes 16; a main connecting hole 42 matching the driving shaft for assembly of the main unit of the self-tightening drill chuck is machined on the upper end of said pushing threaded rod 4; a connecting hole 18 matching O.D. of the lower end of the pushing threaded rod 4 is machined on the upper end of said drill chuck main body 1 along the central axle; the lower end of said pushing threaded rod 4 is movably set into said connecting hole 18; a limiting device for preventing disengagement is set between said drill chuck main body 1 and pushing threaded rod 4; said limiting device includes: a ring-shaped second bearing groove 41 machined externally on the lower end of said pushing threaded rod 4 having a semi-circular cross-section, bearing steel balls 8 and a first bearing groove 14 machined on the inner wall of said connecting hole 18 opposite to said second bearing groove 41; said first bearing groove 14 is of semi-circular shape, with the radius of its cross-section equal to that of the second bearing groove 41; the diameter of said bearing steel ball 8 corresponds to that of the first and second bearing grooves 14, 41; said bearing steel ball 8 is placed into a circular chamber formed by the first and second bearing grooves 14, 41, helping to connect movably the drill chuck main body 1 and pushing threaded rod 4 and prevent disengagement, but also form a rotating bearing to enable rotation of the drill chuck main body 1 and pushing threaded rod 4 with little resistance; a spiral groove 43 having an arc-shaped cross-section is machined on the outer surface of the pushing threaded rod 4, and three through holes are machined along the radial direction on the pushing nut 3 at a position opposite to the spiral groove 43 on the outer surface of the pushing threaded rod 4; one steel ball 44 and one lock-pin 45 preventing the steel ball 44 from falling off are positioned in each through hole; one part of the steel ball 44 is set in said spiral groove 43, and another part of the steel ball 44 set in said through hole; the pushing nut 3 is rotatably jointed on the pushing threaded rod 4 via said steel ball 44. Three T-shaped open slots 31 are machined diametrically on the lower end of the outer flange of said pushing nut 3 correspondingly to the upper end of said three collet jaws 2; a spherical bulge 22 matching T-shaped open slot 31 is located at upper end of said three collet jaws 2, and also movable set into the T-shaped open slot 31.

A limiting groove is set at upper end of said pushing threaded rod 4; said locking spring 5 is a disc spring with a slotted notch machined externally; and a through hole matching O.D. of the pushing threaded rod 4 and said limiting groove is machined into its center; said locking spring 5 is sleeved onto the upper end of said pushing threaded rod 4; said locking gland 6 is a cylinder with lower opening; its inner diameter (I.D.) is bigger than O.D. of the upper end of said casing 9; a gland through hole is machined onto the upper center of said locking gland 6 matching O.D. of the upper end of said pushing threaded rod 4; locking pins 61 are uniformly set onto the inner surface of the upper end of said locking gland 6 along the circumference of the gland through hole; said locking gland 6 is sleeved on the upper end of said pushing threaded rod 4 and located over the locking spring 5; said locknut 7 is a cylinder with lower opening; its I.D. is bigger than O.D. of the locking gland 6, and a female screw hole matching the upper thread of said pushing threaded rod 4 is machined onto its center; said locknut 7 is rotatably jointed on the upper end of said pushing threaded rod 4, and located over said locking gland 6; a spring clip is assembled onto the pushing threaded rod 4 over the locknut 7, so as to prevent the locknut from disengaging from the pushing threaded rod 4; said casing 9 is a cylinder with upper opening; its I.D. is bigger than maximum O.D. of said drill chuck main body 1 and O.D. of said pushing nut 3, and a casing through hole matching the O.D. of lower end of said drill chuck main body 1 is set at its lower end along the central axle; the lower end of said drill chuck main body 1 is tightly sleeved into said casing through hole, and a locking steel ring is fixed onto the upper end of said casing 9, with its I.D. matching O.D. of said locking spring 5.

The operating principle of the entire self-tightening drill chuck is that, the cutter is inserted into the cutter hole 17, and the casing 9 is rotated manually to drive the rotation of the drill chuck main body 1 in relation to the pushing threaded rod 4 connected onto the driving axle of the equipment; since three collet jaws 1 are set in the collet jaw hole 16, and the spherical bulges 22 on the upper end of three collet jaws 2 are separately set into three T-shaped open slots 31 on the pushing nut 3, the rotation of the casing 9 and pushing threaded rod 4 forcibly drives the pushing nut 3 to rotate simultaneously with the pushing threaded rod 4 along with the casing 9 and drill chuck main body 1; the pushing nut 3 is driven by the spiral groove 43 and steel ball 44 of the pushing threaded rod 4 to shift downwards, so three collet jaws 2 are driven to shift downwards along the collet jaw hole 16, then the lower gap of three collet jaws 2 is reduced accordingly until clamping tightly the cutter placed into the cutter hole 17; in such case, the motor is activated, and the pushing threaded rod 4 is rotated at high speed under the action of the driving axle; due to the action of standstill inertia of the drill chuck main body 1, casing 9 and pushing nut 3, a strong impact force occurred at early stage since startup of the pushing threaded rod 4 will force the drill chuck main body 1, casing 9 and pushing nut 3 to rotate together, and also allow three collet jaws 2 to clamp the cutter; in return, the counterforce of the cutter and work piece will also force the drill chuck main body 1, casing 9 and pushing nut 3 to rotate in relation to the pushing threaded rod 4; this increases the chucking power of three collet jaws 1 for the cutter, and the self-tightening function provides higher precision and stability of entire self-tightening drill chuck. If rotating downwards the locknut 7 after clamping the cutter, the locknut 7 will force the locking gland 6 to shift downwards, and the locking pin 61 will press the head of the locking spring 5, such that the deformation will lead to increase of the outer flange diameter of the locking spring 5, and then the locking spring is abutted onto the inner surface of the locking steel ring 91 at upper end of the casing 9; their friction will disable the motion between the casing 9 and pushing threaded rod 4, so entire self-tightening drill chuck is locked to realize reversal of the equipment, i.e.: reverse processing.

The conventional threaded connection between the pushing nut 3 and pushing threaded rod 4 is modified into bearing connection of steel ball 44, so the frictional resistance is reduced greatly; the starting torque for self-tightening will be reduced to allow for self-tightening even if the diameter of cutter is small; on the other hand, the torque for loosening the collet jaw 2 after completion of work is also cut down greatly, thus avoiding efficiently possible locking.

An assembly hole 13 is set at upper end of the drill chuck main body 1 opposite to the first bearing groove 14; said assembly hole 13 is a through hole with female thread having a diameter bigger than that of the bearing steel ball 8; a closed screw 12 is screwed into the assembly hole 13; when it is intended for assembly, the lower end of the pushing threaded rod 4 is inserted into the connecting hole 18 at upper end of the drill chuck main body 1, such that the second bearing groove 41 aligns with the first bearing groove 14; in such case, the bearing steel ball 8 is placed from the assembly hole 13 into the circular chamber formed by the first and second bearing grooves 14, 41, then the pushing threaded rod 4 is rotated, and the bearing steel ball 8 is placed in the next position until bearing steel balls 8 are fully placed in the circular chamber; finally, the closed screw 12 is screwed into the assembly hole 13 to prevent the bearing steel ball 8 from falling off; so this design simplifies the structure and processing/assembly process and cuts down the cost.

The aforementioned T-shaped open slot 31 can also be machined into a cylindrical one, with its cross-section similar to Ω or C having a downward opening; a spherical bulge 22 matching the cylindrical open slot 31 is located at upper end of three collet jaws 2, and also movably set into the cylindrical open slot 31; the upper end of three collet jaws 2 can also be designed into an ellipsoidal shape or a semi-spherical shape having a spherical lower end surface, thereby reducing cross section area of the open slot 31.

A V-shaped groove is set externally on said three collet jaws 2 along the axial line; a pinhole 15 with female thread connected with the collet jaw hole 16 from the exterior of the drill chuck main body 1 is machined separately on the upper end of said drill chuck main body 1 correspondingly to the collet jaw hole 16; a collet jaw stabilizing pin 11 is set into said pinhole 15, and the head of said collet jaw stabilizing pin 11 matches said V-shaped groove; the collet jaw stabilizing pin 11 is screwed into the pinhole 15, such that the head of the collet jaw stabilizing pin 11 is fixed on V-shaped groove of the collet jaw 2, and three collet jaws 2 can only slide vertically along the collet jaw hole 16, thus improving greatly the precision and stability of the product; since no threading is machined on three collet jaws 2, the cylindrical structure makes it easier for processing as compared with the wedged collet jaw, thus reducing markedly the production difficulty and production/management cost.

Similarly, with the setting of the locking steel ring 91, the casing 9 can be made of lightweight and low-cost materials such as plastics, thus the product of this technical scheme can be implemented easily in a broader range of applications since the gross weight and production cost are reduced greatly.

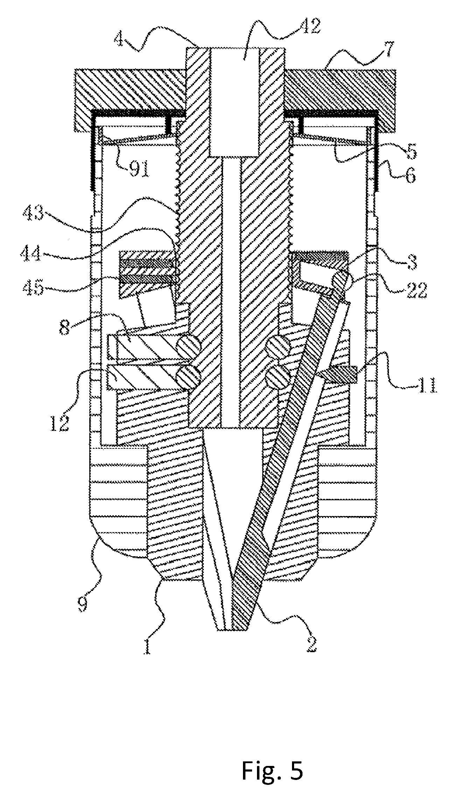

Referring to FIG. 5 for preferred embodiment 2, the difference with preferred embodiment 1 lies in that, the first bearing groove 14 and second bearing groove 41 are set into two groups, such that two bearings are formed between the drill chuck main body 1 and pushing threaded rod 4 for improved stability and reliability.

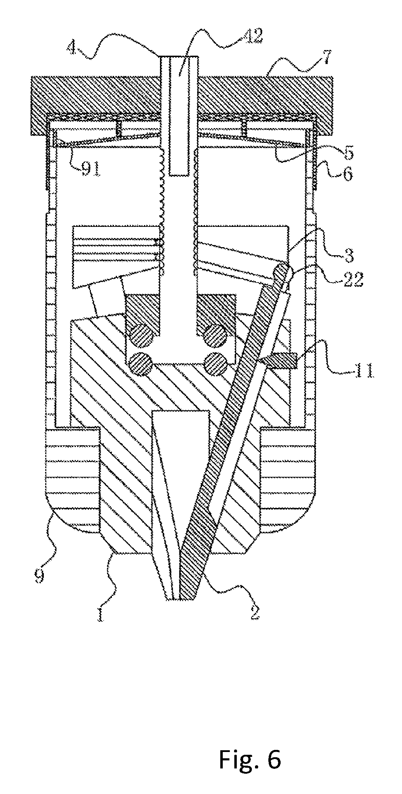

Referring to FIG. 6 for preferred embodiment 3, the difference with preferred embodiment 1 lies in that, a protruding disk with bearing groove machined separately onto its upper and lower surfaces is set at lower end of said pushing threaded rod 4; a bearing groove is also machined onto the bottom of the inner wall of said connecting hole 18 correspondingly to the bearing groove at bottom of said protruding disk, and bearing steel balls 8 are fully placed into the circular chamber formed by the bearing grooves; a cover plate is sleeved onto the pushing threaded rod 4 and also fixed to the upper end of the drill chuck main body 1; a bearing groove is machined onto the lower surface of said cover plate correspondingly to the bearing groove at upper surface of said protruding disk, and bearing steel balls 8 are fully placed into the circular chamber formed by the bearing grooves. Hence, two thrust bearings are formed between the drill chuck main body 1 and pushing threaded rod 4, realizing the requirements due to simple structure, small friction and higher precision and stability.

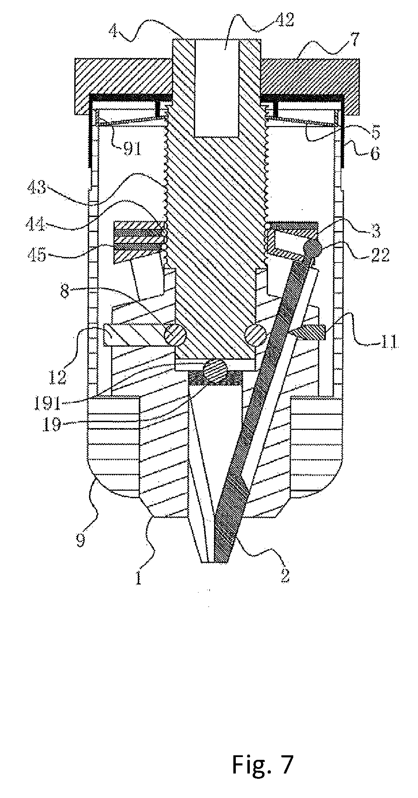

Referring to FIG. 7 for preferred embodiment 4, the difference with preferred embodiment 1 lies in that, a friction disc 19 is fixed onto the upper end of said cutter hole; the lower end surface of said friction disc 19 is machined into a rough surface, and a blind hole is drilled into the upper center of said friction disc 19; an adaptive steel ball 191 is movably installed into the blind hole, and located between said friction disc and pushing threaded rod; the upper part of the adaptive steel ball 191 contacts slightly the lower end of the pushing threaded rod 4, where lubricant is filled during assembly so as to ensure smaller friction between the drill chuck main body 1 and pushing threaded rod 4; when the cutter is loaded into the cutter hole, the upper end of the cutter contacts the lower rough surface of the friction disc 19, the bigger friction between them allows more resisting torque between the cutter and work piece to be transferred to the drill chuck main body 1, such that the torque for rotation of the drill chuck main body 1 and pushing threaded rod 4 becomes bigger, making it easier for self-tightening.

In the case of 3 through holes in aforementioned scheme, these through holes shall be uniformly distributed at 120°along the spiral groove 43; in the case of 4 through holes, these through holes are distributed at 90°, so that the pushing nut 3 is stably and rotatably jointed on the pushing threaded rod 4.

In the aforementioned technical scheme, the bearing steel balls 8 can also be replaced by cylindrical or tapered steel bearing rollers; in such case, the circular chamber formed between the inner wall of the pushing threaded rod 4 and connecting hole 18 matches the aforementioned bearing roller; in the occasions only requiring for lower price, a circular groove is machined only on the lower end of the pushing threaded rod 4, then at least 3 through holes are uniformly drilled on the upper end of the drill chuck main body 1 correspondingly to the circular groove; a spacer pin is assembled into the through hole, and the front end of the spacer pin is embedded into the circular groove; the pushing threaded rod 4 can rotate freely in relation to the drill chuck main body 1, but is not disengaged from the drill chuck main body 1 under the blocking of the spacer pin.

In the occasions without need of reverse processing, the locking spring 5, locking gland 6, locknut 7 and locking steel ring 91 can be canceled to further reduce the cost for meeting different production requirements.

However, it should be appreciated that the present invention is capable of a variety of embodiments and various modifications by those skilled in the art, and all such variations or changes shall be embraced within the scope of the following claims.

## Claims

1. A self-tightening drill chuck, comprising: a drill chuck main body and three collet jaws; of which three collet jaw holes penetrating the upper and lower ends are machined obliquely and symmetrically on said drill chuck main body, and a cutter hole bigger than maximum assembly O.D. is machined on the lower end along the central axle of said drill chuck main body; said three collet jaws are separately and slidably assembled into said collet jaw holes; and said three collet jaws are of cylindrical bodies with smooth surface; said self-tightening drill chuck also comprises pushing threaded rod and pushing nut; of which a taper hole or screw hole or connecting hole matching the driving shaft for assembly of the main unit of the self-tightening drill chuck is machined on the upper end of said pushing threaded rod; a connecting hole matching O.D. of the lower end of the pushing threaded rod is machined on the upper end of said drill chuck main body along the central axle; the lower end of said pushing threaded rod is movably set into said connecting hole; a limiting device for preventing disengagement is set between said drill chuck main body and pushing threaded rod; three open slots are machined diametrically on the lower end of the outer flange of said pushing nut correspondingly to the upper end of said three collet jaws, with the cross-section having a non-closed curve with lower opening; the width of the lower opening is smaller than the maximal spacing of any two linking points on the curve in parallel with the opening; the upper end of said three collet jaws is provided with a bulge matching said open slot; and said bulge is movably set into the corresponding open slot; it is **characterized by** that, a spiral groove having an arc-shaped cross-section is machined on the outer surface of the pushing threaded rod, at least three through holes are machined along the radial direction on the pushing nut at a position opposite to the spiral groove on the outer surface of the pushing threaded rod; one steel ball and one lock-pin preventing the steel ball from falling off are positioned in each through hole; one part of the steel ball is set in said spiral groove, and another part of the steel ball is set in said through hole, the pushing nut is rotatably jointed on the pushing threaded rod via said steel ball.

2. The self-tightening drill chuck as claimed in Claim 1, wherein the bulge at upper end of said collet jaw is of spherical or semi-spherical shape, and said bulge is movably set into said open slot.

3. The self-tightening drill chuck as claimed in Claim 1 or 2, wherein a friction disc is fixed onto the upper end of said cutter hole; the lower end surface of said friction disc is machined into a rough surface, and a blind hole is drilled into the upper center of said friction disc; an adaptive steel ball is movably installed into the blind hole, and located between said friction disc and pushing threaded rod over the upper plane of the friction disc.

4. The self-tightening drill chuck as claimed in Claim 1 or 2, wherein said limiting device includes: a ring-shaped second bearing groove machined externally on the lower end of said pushing threaded rod having at least a semi-circular cross-section, bearing steel balls and a first bearing groove machined on the inner wall of said connecting hole opposite to said second bearing groove; said first bearing groove is of semi-circular shape, with the radius of its cross-section equal to that of the second bearing groove; the diameter of said bearing steel ball corresponds to that of the first and second bearing grooves; said bearing steel balls are placed into a circular chamber formed by the first and second bearing grooves.

5. The self-tightening drill chuck as claimed in Claim 4, wherein an assembly hole is set at upper end of said drill chuck main body opposite to the first bearing groove; said assembly hole is a through hole with female thread having a diameter bigger than that of the bearing steel ball; a closed screw is screwed into the assembly hole.

6. The self-tightening drill chuck as claimed in Claim 1 or 2, wherein said limiting device includes: a protruding disk set at lower end of said pushing threaded rod, bearing steel balls and a cover plate; a protruding disk with bearing groove machined separately onto its upper and lower surfaces is set at lower end of said pushing threaded rod; a bearing groove is also machined onto the bottom of the inner wall of said connecting hole correspondingly to the bearing groove at bottom of said protruding disk, and bearing steel balls are fully placed into the circular chamber formed by the bearing grooves; said cover plate is sleeved onto the pushing threaded rod and also fixed to the upper end of the drill chuck main body; a bearing groove is machined onto the lower surface of said cover plate correspondingly to the bearing groove at upper surface of said protruding disk, and bearing steel balls are fully placed into the circular chamber formed by the bearing grooves.

7. The self-tightening drill chuck as claimed in Claim 1 or 2, wherein said self-tightening drill chuck also includes: a tightening device, which consists of a casing, locking spring, locking gland and locknut; a limiting groove is set at upper end of said pushing threaded rod; said locking spring is a disc spring with a slotted notch machined externally; and a through hole matching O.D. of the pushing threaded rod and said limiting groove is machined into its center; said locking spring is sleeved onto the upper end of said pushing threaded rod; said locking gland is a cylinder with lower opening; its I.D. is bigger than O.D. of the upper end of said casing; a gland through hole is machined onto the upper center of said locking gland matching O.D. of the upper end of said pushing threaded rod; locking pins are uniformly set onto the inner surface of the upper end of said locking gland along the circumference of the gland through hole; said locking gland is sleeved on the upper end of said pushing threaded rod and located over the locking spring; said locknut is a cylinder with lower opening; its I.D. is bigger than O.D. of the locking gland, and a female screw hole matching the upper thread of said pushing threaded rod is machined onto its center; said locknut is rotatably jointed on the upper end of said pushing threaded rod, and located over said locking gland; said casing is a cylinder with upper opening; its I.D. is bigger than maximum O.D. of said drill chuck main body and O.D. of said pushing nut, and a casing through hole matching the O.D. of lower end of said drill chuck main body is set at its lower end along the central axle; the lower end of said drill chuck main body is tightly sleeved into said casing through hole, and I.D. of the upper end of said casing matches O.D. of said locking spring.

8. The self-tightening drill chuck as claimed in Claim 7, wherein a locking steel ring is fixed onto the inner wall of the upper end of said casing; I.D. of said locking steel ring matches O.D. of said locking spring.

9. The self-tightening drill chuck as claimed in Claim 1 to 2, wherein a V-shaped groove is set externally on said collet jaw along the axial line; a pinhole connected with the collet jaw hole from the exterior of the drill chuck main body is machined separately on the upper end of said drill chuck main body correspondingly to the collet jaw hole; a collet jaw stabilizing pin is set into said pinhole, and the head of said collet jaw stabilizing pin matches said V-shaped groove.
